# FASCICULE DE BREVET EUROPEEN

(11) **EP 3 614 514 B1**
(45) Date de publication et mention de la délivrance du brevet: **01.04.2026**
(21) Numéro de dépôt: 19198747.8
(22) Date de dépôt: 06.10.2014
(51) Int. Cl.: H02H 3/16, B60L 3/04, H02J 7/14, H02J 1/10, B60R 16/03, B60L 1/00, B60L 3/00, B60L 58/20, H02H 3/24, H02H 5/10

(54) **DISPOSITIF ÉLECTRIQUE OU ÉLECTRONIQUE À DEUX TENSIONS D'ALIMENTATION**
ELEKTRISCHE ODER ELEKTRONISCHE VORRICHTUNG MIT ZWEI VERSORGUNGSSPANNUNGEN
ELECTRICAL OR ELECTRONIC DEVICE WITH TWO SUPPLY VOLTAGES

(30) Priorité: 10.10.2013 FR 1359828
(43) Date de publication de la demande: 26.02.2020
(62) Demande divisionnaire de: 14780882.8
(73) Titulaire: Valeo Electrification, 95892 Cergy Pontoise (FR)
(72) Inventeur: ELBHAR, Thierry, 78322 LE MESNIL SAINT-DENIS CEDEX (FR); FOURNIER, Jonathan, 78322 LE MESNIL SAINT-DENIS CEDEX (FR); PUZENAT, Bertrand, 78322 LE MESNIL SAINT-DENIS CEDEX (FR)
(74) Mandataire: Valeo Powertrain Systems

(56) Documents cités:
- WO-A1-2013/050207
- WO-A2-2012/131235
- US-A- 3 259 803
- US-B1- 6 781 502
- US-B1- 8 134 820

## Description

La présente invention concerne les dispositifs électriques ou électroniques nécessitant deux tensions d'alimentation distinctes.

L'invention concerne notamment, bien que non exclusivement, le domaine des véhicules motorisés où certains équipements doivent être conçus pour fonctionner avec deux tensions d'alimentation de valeurs distinctes, typiquement une tension basse de l'ordre de 12 Volts, et une tension moyenne de l'ordre de 48 Volts.

Le document WO 2012/131235 porte sur un système d'alimentation électrique comprenant deux réseaux d'alimentation électrique et sur une stratégie appliquée à un véhicule hybride dans le but de charger deux batteries différentes - l'une étant au plomb de tension nominale de 12 V et l'autre au lithium de tension nominale 60 V. Le système comprenant un module interrupteur (fusible 17) interposé en série sur la masse commune, le module interrupteur étant apte à basculer dans une position ouverte en cas de hausse du courant circulant sur la masse commune.

Pour ce type d'équipements, une spécification définissant notamment certaines règles d'architecture et des tests de validation est actuellement en cours de développement par un Consortium de constructeurs automobiles. Cette spécification (« Electrical and Electronic components in the vehicle 48 V
- vehicle electrical system, Requirement and tests », spécification 148 du 29/08/2011) requiert en particulier :
   - que tout équipement 12 Volts/48 Volts possède une masse commune, et inclue une interface de connectique 12 Volts pour permettre sa connexion au réseau véhicule de 12 Volts, et une interface de connectique 48 Volts pour permettre sa connexion au réseau véhicule de 48 Volts, chaque interface de connectique ayant sa propre connexion de masse ;
   - que tout équipement 12 Volts/48 Volts satisfasse à un test de mesure des courants de fuite, de manière à garantir que les alimentations de 48 Volts et de 12 Volts sont bien protégées contre ces courants de fuite ;
   - que tout équipement 12 Volts/48 Volts satisfasse à un test de perte du câble de masse du réseau 48 Volts, de manière à garantir que le câble de masse du réseau 12 Volts ne risque pas d'être endommagé suite à un défaut dans le câble de masse du réseau 48 Volts.

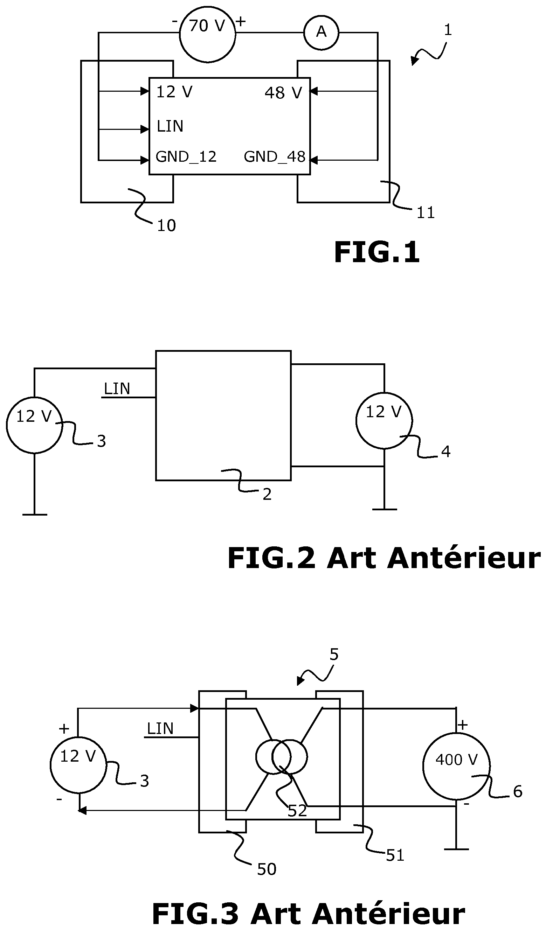

La figure 1 illustre schématiquement le montage réalisé pour le test de validation relatif aux courants de fuite d'un dispositif électrique ou électronique 1 comprenant une première interface connectique 10 pour le 12 Volts, et une seconde interface connectique 11 pour le 48 Volts. Ce test consiste à relier toutes les entrées/sorties de la première interface de connectique 10 à une première borne d'un générateur de tension continue, à relier les entrées de la seconde interface de connectique 11 à la deuxième borne du générateur de tension continue, à appliquer une tension de 70 Volts au moyen du générateur de tension continue, et à mesurer le courant par un ampèremètre classique. Le dispositif électrique ou électronique 1 est validé si, lors de ce test, le courant mesuré reste inférieur ou égal à 1 microampère (en valeur absolue).

Le deuxième test de perte de masse consiste à connecter le dispositif électrique ou électronique entre deux alimentations 12 Volts et 48 Volts, à simuler la perte du câble de masse du côté 48 Volts et à constater d'éventuels dommages sur le câble de masse du côté 12 Volts. Le dispositif électrique ou électronique 1 est validé si, lors de ce test, aucun dommage n'est constaté au bout d'une durée d'environ 30 minutes.

On connaît déjà des architectures de dispositifs électriques ou électroniques susceptibles de fonctionner avec deux tensions d'alimentation. La figure 2 illustre en particulier de façon schématique un module réchauffeur additionnel 2 qui utilise pour son alimentation deux tensions de 12 Volts, l'une à faible puissance, représentée par le générateur de tension 3, l'autre à une puissance plus forte, typiquement de l'ordre de 1000 à 1200 Watts, représentée par le générateur de tension 4. Un tel réchauffeur additionnel est utilisé au démarrage d'un véhicule automobile pour réchauffer plus rapidement l'habitacle. L'alimentation à faible puissance 3 est utilisée pour la gestion et l'interface du module 2 alors que l'alimentation à plus forte puissance 4 est utilisée pour alimenter les résistances chauffantes (non représentées) contenues dans le module. Comme on le voit sur l'architecture de la figure 2, seule la masse du générateur de tension 4 est connectée au module. De plus, l'entrée de données LIN du module est alimentée par le générateur de tension 3 et la masse du générateur 4. Une telle architecture ne pourrait donc pas être utilisée pour un dispositif 12 Volts/48 Volts conforme à la spécification citée ci-dessus qui impose deux masses distinctes pour chaque réseau d'alimentation. En outre, la perte du câble de masse du générateur 4 implique que le module 2 ne peut plus communiquer sur son entrée de données LIN.

La figure 3 représente schématiquement une autre architecture connue de dispositif électrique ou électronique 5 utilisée dans les véhicules automobiles électriques. Ici, le dispositif 5 est alimenté, au travers de deux interfaces de connectique 50 et 51, avec deux tensions très différentes, une première tension faible de l'ordre de 12 Volts, représentée par le générateur de tension 3, et une deuxième tension très haute, de l'ordre de 400 Volts, représentée par le générateur de tension 6. Pour des questions de sécurité, ce type de dispositif 5 doit comporter obligatoirement un transformateur d'isolement 52 afin de créer une isolation galvanique entre l'alimentation à 12 Volts et l'alimentation à 400 Volts.

Une architecture similaire pourrait être utilisée pour réaliser un dispositif électrique ou électronique 12 Volts/48 Volts compatible avec la spécification citée ci-avant. Néanmoins, cette solution est coûteuse et encombrante, du fait de l'utilisation d'un transformateur d'isolement, et reste complexe à mettre en œuvre.

L'invention a pour objectif de pallier les inconvénients précédents en proposant une architecture simple de dispositif électrique ou électronique à deux tensions d'alimentation, par exemple 12 Volts/48 Volts, qui réponde aux exigences de la spécification relatives à la présence de deux bornes de masse, et qui permette de satisfaire à au moins l'un des deux tests précités.

La présente invention répond à cet objectif en proposant un dispositif électrique ou électronique apte à être alimenté en fonctionnement par une première valeur de tension générée par un premier réseau électrique et par une deuxième valeur de tension supérieure à la première valeur de tension et générée par un deuxième réseau électrique, selon la revendication 1.

Par conditions de liaison normales, on entend les liaisons nécessaires au fonctionnement normal du dispositif, c'est-à-dire les connexions habituelles des interfaces de connectique aux deux réseaux électriques.

D'autres caractéristiques possibles particulièrement avantageuses sont définies dans les revendications dépendantes.

L'invention et les avantages qu'elle procure seront mieux compris au vu de la description suivante d'un exemple non limitatif de mise en œuvre de l'invention, faite en référence aux figures annexées, dans lesquelles :
- la figure 1, déjà décrite ci-avant, représente schématiquement le circuit électrique équivalent pour un test de mesure de courant de fuite d'un dispositif 12 Volts/ 48 Volts prescrit par la spécification 148 précitée ;
- la figure 2, déjà décrite ci-avant, illustre schématiquement une architecture connue pour un dispositif utilisant deux tensions d'alimentation de 12 Volts ;
- la figure 3, déjà décrite ci-avant, illustre schématiquement une architecture connue pour un dispositif utilisant une tension d'alimentation de 12 Volts et une tension d'alimentation de 400 Volts ;
- la figure 4 illustre schématiquement un exemple d'architecture d'un dispositif électrique ou électronique à deux tensions d'alimentation, par exemple 12 Volts/48 Volts, conforme à la présente invention.

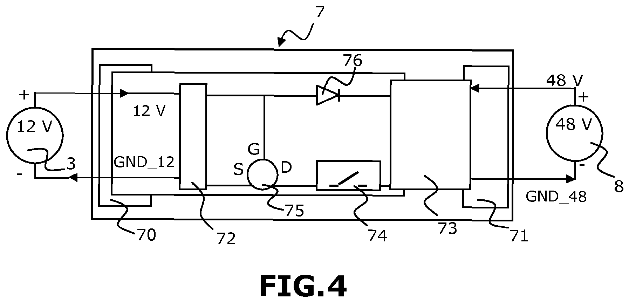

La figure 4 représente un dispositif électrique ou électronique 7 selon un mode de réalisation possible de l'invention, dans le cadre non limitatif d'une double alimentation 12 Volts/ 48 Volts. Ce dispositif 7 est représenté dans ses conditions d'utilisation, c'est-à-dire recevant une première tension d'alimentation de 12 Volts d'un premier réseau à 12 Volts (représenté par un générateur de tension 3), et une deuxième tension d'alimentation plus élevée, typiquement de l'ordre de 48 Volts, d'un second réseau à 48 Volts (représenté par un générateur de tension 8). Pour ce faire, le dispositif 7 comporte :
- une première interface de connectique 70 apte à être reliée aux deux bornes du générateur de tension 3, c'est-à-dire en pratique au conducteur de masse GND_12 et au conducteur de tension 12 Volts du premier réseau à 12 Volts ;
- une deuxième interface de connectique 71 apte à être reliée aux deux bornes du générateur de tension 8, c'est-à-dire en pratique au conducteur de masse GND_48 et au conducteur de tension 48 Volts du second réseau à 48 Volts.

A l'intérieur du dispositif 7, les connexions de masse des deux interfaces de connectique 70 et 71 sont reliées ensemble pour former une masse commune.

Entre les deux interfaces de connectiques 70 et 71, le dispositif 7 comporte, de manière préférentielle, un module 72 de filtrage EMC (initiales anglo-saxonnes mises pour Electro Magnetic Compatibility) pour supprimer de possibles variations de tensions, et un module 73 d'interface 12 Volts/ 48 Volts qui intègre les fonctionnalités propres au dispositif. Par exemple, si le dispositif 7 est un réchauffeur additionnel, le module 73 comportera les composants de gestion et l'interface ainsi que les résistances chauffantes.

Le dispositif 7 comporte en outre un premier module interrupteur 74 interposé en série sur la masse commune reliant les deux connexions de masse des interfaces de connectique 70 et 71, ce premier module interrupteur 74 étant apte à être commandé dans une position fermée tant que le courant le traversant est inférieur à une valeur seuil de l'ordre de 200 mA approximativement, et à basculer en position ouverte si le courant le traversant passe au-dessus de la valeur seuil.

Ce premier module interrupteur 74 peut être réalisé par l'association d'un circuit de mesure de courant, composé typiquement d'un amplificateur et d'un comparateur, et d'un transistor de type MOSFET commandé pour ouvrir le circuit de masse dès que le circuit de mesure de courant détecte un courant supérieur à la valeur seuil.

En variante et de manière préférentielle, ce module interrupteur 74 sera composé d'un fusible réarmable, par exemple une résistance à coefficient de température positif ou résistance CTP, de valeur infinie si le courant traversant la résistance est très supérieur à la valeur seuil.

La présence de ce premier module interrupteur 74 permet au dispositif 7 de satisfaire au test de la perte du câble de masse GND_48. En effet, si le câble de masse GND_48 est sectionné, un courant important va passer au travers de la masse commune et provoquer l'ouverture de l'interrupteur 74.

Le dispositif 7 comporte en outre un deuxième module interrupteur 75 également en série sur la masse commune, associé à une diode anti-retour 76. Le deuxième module interrupteur est par exemple un transistor de type MOSFET alimenté par le réseau 12 Volts, c'est-à-dire dont la source S et le drain D sont reliés respectivement à la connexion de masse du module de connectique 70 et à la connexion de masse du module de connectique 71, et dont la grille G reçoit la tension 12 Volts. En fonctionnement normal, ce transistor MOSFET se trouve classiquement en position fermée puis sa tension V_{GS} entre la Grille et la source est alors égale à 12 Volts. La diode 76 va faire quant à elle passer le courant dans le sens 12 Volts vers le module 73 d'interface 12V/48 V.

L'intérêt de ce deuxième module interrupteur 75 est de permettre au dispositif 7 de satisfaire au test de mesure des courants de fuite. En effet, en réalisant ce test (conformément au schéma électrique de la figure 1), toutes les entrées/sorties de la première interface de connectique 70 sont reliées entre elles, de sorte que la tension V_{GS} devient nulle, même en appliquant la tension de 70 Volts imposée par le test, et fait basculer le transistor dans sa position ouverte. La diode anti-retour 76 garantit quant à elle qu'aucun courant ne pourra circuler dans l'autre sens, c'est-à-dire depuis la deuxième interface de connectique 71 vers la première interface de connectique 70.

Au vu de ce qui précède, chacun des deux modules interrupteurs 74 et 75 décrits précédemment est apte à basculer dans une position ouverte suite à une modification des conditions de liaison de la première ou de la deuxième interface : en particulier, pour le test de mesure des courants de fuite, les liaisons de l'interface de connectique 70 sont modifiées par rapport au fonctionnement normal, d'où la fermeture du module interrupteur 75. De manière similaire, la perte (déconnexion ou câble endommagé) du câble de masse GND_48 constitue une modification des conditions de liaison normale de la deuxième interface 71 de connectique, ayant pour conséquence la fermeture du module interrupteur 74.

Dans tous les cas, le dispositif obtenu répond à divers points requis par la spécification 148, tout en ayant une structure simple, peu coûteuse et à faible encombrement.

Bien que l'invention ait été décrite dans le cadre de l'application 12 Volts/48 Volts du domaine automobile, elle peut trouver un intérêt dans tous les cas où un dispositif requiert une double alimentation à des valeurs de tension dites sécuritaires.

## Revendications

1. Dispositif électrique ou électronique (7) apte à être alimenté en fonctionnement par une première valeur de tension générée par un premier réseau électrique (3) et par une deuxième valeur de tension supérieure à la première valeur de tension et générée par un deuxième réseau électrique (8), le dispositif comportant :
- une première interface (70) de connectique apte à être reliée, dans des conditions de liaison normales, à un conducteur de masse (GND_12) et un conducteur de tension du premier réseau électrique (3);
- une deuxième interface (71) de connectique apte à être reliée, dans lesdites conditions de liaison normales, à un conducteur de masse (GND_48) et un conducteur de tension du deuxième réseau électrique (8);
chaque interface de connectique comportant une connexion de masse et les connexions de masse des deux interfaces (70, 71) de connectique étant reliées ensemble pour former une masse commune ; et
- au moins un premier et un deuxième module interrupteur (74 ; 75) interposé en série sur la masse commune, chaque module interrupteur étant apte à basculer dans une position ouverte suite à une modification des conditions de liaison de la première ou de la deuxième interface, le premier module interrupteur (74) étant apte à être commandé dans une position fermée tant que le courant le traversant est inférieur à une valeur seuil de l'ordre de 200 mA approximativement, et à basculer en position ouverte si le courant le traversant passe au-dessus de la valeur seuil le deuxième module interrupteur (75) étant apte à basculer dans une position ouverte dès lors que toutes les entrées/sorties de la première interface de connectique sont reliées ensemble, **caractérisé en ce que** le deuxième module interrupteur (75) est associé à une diode anti-retour (76) apte à empêcher tout courant de circuler vers la première interface de connectique (70) lorsque le deuxième module interrupteur (75) est en position ouverte.

2. Dispositif selon la revendication 1, **caractérisé en ce que** ledit premier module interrupteur (74) comprend une résistance à coefficient positif en série sur la masse commune.

3. Dispositif selon la revendication 1, **caractérisé en ce que** ledit premier module interrupteur (74) comprend un transistor commandé par un circuit de mesure de courant apte à mesurer le courant circulant sur la masse commune.

4. Dispositif selon la revendication 1, **caractérisé en ce que** le deuxième module interrupteur (75) comporte un transistor MOSFET alimenté en tension par le premier réseau électrique (3).

5. Dispositif selon l'une quelconque des revendications précédentes, **caractérisé en ce que** la première valeur de tension est de l'ordre de 12 Volts, et la deuxième valeur de tension est de l'ordre de 48 Volts.

## Patentansprüche

1. Elektrische oder elektronische Vorrichtung (7), die im Betrieb mit einem ersten Spannungswert, der von einem ersten elektrischen Netz (3) erzeugt wird, und mit einem zweiten Spannungswert, der höher als der erste Spannungswert ist und von einem zweiten elektrischen Netz (8) erzeugt wird, versorgt werden kann, wobei die Vorrichtung umfasst:
- eine erste Schnittstellenverbindung (70), die unter normalen Verbindungsbedingungen mit einem Massenleiter (GND_12) und einem Spannungsleiter des ersten elektrischen Netzes (3) verbunden werden kann;
- eine zweite Schnittstellenverbindung (71), die unter den genannten normalen Verbindungsbedingungen mit einem Massenleiter (GND_48) und einem Spannungsleiter des zweiten elektrischen Netzes (8) verbunden werden kann;
wobei jede Schnittstellenverbindung einen Massenanschluss aufweist und die Massenanschlüsse der beiden Schnittstellenverbindungen (70, 71) miteinander verbunden sind, um eine gemeinsame Masse zu bilden; und
- mindestens ein erstes und ein zweites Schaltmodul (74; 75), die in Reihe auf der gemeinsamen Masse angeordnet sind, wobei jedes Schaltmodul in der Lage ist, in eine offene Position zu schalten, wenn sich die Verbindungsbedingungen der ersten oder der zweiten Schnittstelle ändern, wobei das erste Schaltmodul (74) in der Lage ist, in einer geschlossenen Position gesteuert zu werden, solange der Strom, der es durchfließt, unter einem Schwellenwert von etwa 200 mA liegt, und in eine offene Position zu schalten, wenn der Strom, der es durchfließt, über den Schwellenwert steigt, wobei das zweite Schaltmodul (75) in der Lage ist, in eine offene Position zu schalten, sobald alle Ein-/Ausgänge der ersten Schnittstellenverbindung miteinander verbunden sind, **dadurch gekennzeichnet, dass** das zweite Schaltmodul (75) mit einer Rückflussdiode (76) verbunden ist, die in der Lage ist, jeglichen Stromfluss zur ersten Schnittstellenverbindung (70) zu verhindern, wenn das zweite Schaltmodul (75) in offener Position ist.

2. Vorrichtung nach Anspruch 1, **dadurch gekennzeichnet, dass** das erste Schaltmodul (74) einen Widerstand mit positivem Koeffizienten in Reihe auf der gemeinsamen Masse umfasst.

3. Vorrichtung nach Anspruch 1, **dadurch gekennzeichnet, dass** das erste Schaltmodul (74) einen Transistor umfasst, der von einer Strommessschaltung gesteuert wird, die in der Lage ist, den auf der gemeinsamen Masse fließenden Strom zu messen.

4. Vorrichtung nach Anspruch 1, **dadurch gekennzeichnet, dass** das zweite Schaltmodul (75) einen MOSFET-Transistor umfasst, der vom ersten elektrischen Netz (3) mit Spannung versorgt wird.

5. Vorrichtung nach einem der vorhergehenden Ansprüche, **dadurch gekennzeichnet, dass** der erste Spannungswert in der Größenordnung von 12 Volt liegt und der zweite Spannungswert in der Größenordnung von 48 Volt liegt.

## Claims

1. Electrical or electronic device (7) capable of being powered in operation by a first voltage value generated by a first electrical network (3) and by a second voltage value higher than the first voltage value and generated by a second electrical network (8), the device comprising:
- a first connector interface (70) capable of being connected, under normal connection conditions, to a ground conductor (GND_12) and a voltage conductor of the first electrical network (3);
- a second connector interface (71) capable of being connected, under said normal connection conditions, to a ground conductor (GND_48) and a voltage conductor of the second electrical network (8);
each connector interface having a ground connection and the ground connections of the two connector interfaces (70, 71) being connected together to form a common ground; and
- at least a first and a second switch module (74; 75) interposed in series on the common ground, each switch module being capable of switching to an open position following a modification of the connection conditions of the first or second interface, the first switch module (74) being capable of being controlled in a closed position as long as the current passing through it is less than a threshold value of approximately 200 mA, and of switching to an open position if the current passing through it goes above the threshold value, the second switch module (75) being capable of switching to an open position as soon as all inputs/outputs of the first connector interface are connected together, **characterized in that** the second switch module (75) is associated with a non-return diode (76) capable of preventing any current from flowing to the first connector interface (70) when the second switch module (75) is in the open position.

2. Device according to claim 1, **characterized in that** said first switch module (74) comprises a positive coefficient resistor in series on the common ground.

3. Device according to claim 1, **characterized in that** said first switch module (74) comprises a transistor controlled by a current measurement circuit capable of measuring the current flowing on the common ground.

4. Device according to claim 1, **characterized in that** the second switch module (75) comprises a MOSFET transistor powered by voltage from the first electrical network (3).

5. Device according to any one of the preceding claims, **characterized in that** the first voltage value is approximately 12 Volts, and the second voltage value is approximately 48 Volts.
